Europäisches Patentamt

European Patent Office

Office européen des brevets

(19)

(11) Publication number: **0 269 785**
**B1**

# EUROPEAN PATENT SPECIFICATION

(12)

(45) Date of publication of the patent specification:
24.01.90

(51) Int. Cl.⁴: **G01G 19/32**

(21) Application number: 87110402.2

(22) Date of filing: 16.11.81

(60) Publication number of the earlier application in accordance
with Art. 76 EPC: **0052498**

(54) **Combinatorial weighing system.**

(30) Priority: 18.11.80  JP 162983/80
12.01.81  JP 3354/81
27.01.81  JP 11318/81
27.06.81  JP 10008/81

(43) Date of publication of application:
08.06.88 Bulletin 88/23

(45) Publication of the grant of the patent:
24.01.90 Bulletin 90/4

(84) Designated Contracting States:
AT BE CH DE FR GB IT LI LU NL SE

(56) References cited:
US-A- 3 939 928
US-A- 4 399 880

(73) Proprietor: KABUSHIKI KAISHA ISHIDA KOKI
SEISAKUSHO, 44, Shogoin Sannou-cho Sakyo-ku,
Kyoto-shi Kyoto 606(JP)

(72) Inventor: Minamida, Kazukiyo, c/o 44,
Syogoinsanno-cho Sakyo-ku, Kyoto-shi Kyoto 606(JP)
Inventor: Asai, Yoshiharu, c/o 44, Syogoinsanno-cho
Sakyo-ku, Kyoto-shi Kyoto 606(JP)
Inventor: Kakita, Yokio, c/o 44, Syogoinsanno-cho
Sakyo-ku, Kyoto-shi Kyoto 606(JP)
Inventor: Mikami, Yoshihara, c/o 44, Syogoinsanno-cho
Sakyo-ku, Kyoto-shi Kyoto 606(JP)
Inventor: Konishi, Satoshi, c/o 44, Syogoinsanno-cho
Sakyo-ku, Kyoto-shi Kyoto 606(JP)

(74) Representative: Hillier, Peter et al, Reginald W. Barker &
Co., 13, Charterhouse Square, London, EC1M 6BA(GB)

Note: Within nine months from the publication of the mention of the grant of the European patent, any person may give notice to
the European Patent Office of opposition to the European patent granted. Notice of opposition shall be filed in a written reasoned
statement. It shall not be deemed to have been filed until the opposition fee has been paid (Art. 99(1) European patent
convention).

ACTORUM AG

# Description

The present invention relates to a combinatorial weighing system and more particularly to a method and apparatus for collecting articles weighed out in such a combinatorial weighing system.

A combinatorial weighing system comprising a plurality of weighing sections, computes combinations on the basis of weight values indicated by the weighing sections, searches for a particular combination whose addition value is equal or closest to a set value (weight or number of articles) and decides it as a combination for discharge.

The combinatorial weighing and collection of articles weighed out in this type of combinatorial weighing system are performed, for example, in the following manner: Groups of articles fed into a plurality of weighing hoppers are weighed by weighing machines associated with the weighing hoppers, addition values are computed of any desired number of combinations or all possible combinations of the weight values thus obtained the addition values are individually compared with a set weight to find a particular combination whose addition value is equal or closest to the set weight, and articles are discharged from the corresponding hoppers into a discharge chute and then collected in a timing hopper. There is another arrangement wherein weight values indicated by the weighing machines are each divided by the single-article weight to convert each value into the number of articles, addition is performed on each of the combinations of these numbers to find a particular addition value equal or closest to a set number and articles are discharged and collected.

In each case very accurate computations can be performed but recently there has been a requirement for improved weighing capability. In order to improve weighing capability, however, it is important to increase the feed rate, weighing rate and discharge rate of articles and to efficiently collect articles discharged in each weighing operation.

US-A-3 939 928 discloses a combinatorial weighing system having a plurality of weighing hoppers with a plurality of weighing machines respectively associated with the weighing hoppers for weighing articles received in the weighing hoppers. An arithmetic section performs combinatorial operation on the basis of weighed data from the weighing machines and sends discharge signals to the weighing hoppers. A collecting chute collects articles discharged from the weighing hoppers and discharges them through a discharge port.

Of these three rates, it is possible to increase the weighing and discharge rates, but what matters most is the rate of collection of articles. More particularly, collection of articles, which are selected by combinatorial operation and discharged, at, e.g., twice the conventional rate of collection is attended with a difficulty that because of the distance between respective weighing hoppers and the timing hopper, articles discharged the last time mix with those discharged this time. Further, if the number of weighing machines is increased to increase the weighing accuracy, the chute must be correspondingly increased in size and the distance referred to above becomes longer. As a result, articles discharged in two successive operations mix with each other or articles fall at a greater speed and collide against articles at the discharge port of the collecting chute, with possible damage to these articles.

As for the weighing and discharge rates, in the conventional weighing (or counting) system, when a particular combination for discharge is obtained from the results of combinatorial operation and articles are discharged no weight data necessary for combinatorial operation are obtained from the weighing machines from which articles have been discharged and which are now empty, so that the computing function remains stopped until these weighing machines are newly fed with articles. That is, it has been impossible to reduce the article discharge interval in the conventional system to below the interval corresponding to the time required for weighing machines to discharge articles and then receive fresh articles and deliver weight data plus the time required for combinatorial operation. When the mechanism of the conventional system is investigated it is seen that the weighing machines which have discharged articles cannot participate in combinatorial operation until they are newly fed with articles but that the remaining weighing machines are delivering weight data. This means that if the next discharge combination is obtained by performing combinatorial operation by using the weight data from the remaining weighing machines, the article discharge interval can be shortened and weighing or counting speed can be doubled.

An object of the invention is to provide an improved combinatorial weighing system.

According to the present invention, there is provided a combinatorial weighing system comprising a plurality of weighing machines for weighing articles, an arithmetic section for performing combinatorial operation on the basis of weighed data obtained by said weighing machines and sending discharge signals to the weighing machines, and a chute for discharging articles from the weighing machines; characterised in that each weighing machine has two discharging ports, in that the chute has a plurality of discharge paths with which the two discharge ports of each weighing machine are respectively associated, and in that said discharge ports are actuated by different signals independently of one another.

When articles are to be collected, they can be discharged separately through the chute sections from either of the two discharge ports of each weighing hopper, so that even if they are combinatorially selected and discharged at twice the usual speed, it is possible to separately discharge groups of articles in each cycle, avoiding the mixing of articles, and improving the weighing capability and collecting operation. Further, since the construction is simple, the invention can be embodied at low cost; thus, it is economical. The invention can be applied to a large-sized collecting chute and improved weighing accuracy can be easily attained by increasing the number of weighing machines, which is allowed by the use of such large-sized collecting chute. Thus the invention is very useful.

Embodiments of the invention will now be described with reference to the accompanying drawings, in which:-

Fig. 1 is a schematic elevational sectonal view showing an embodiment of an article collecting apparatus in a combinatorial weighing system according to the invention;

Fig. 2 is a plan view of the apparatus of Fig. 1;

Figs. 3 to 5 are time charts each showing an operation timing for the apparatus of Fig. 1;

Fig. 6 is a schematic front view showing a modification of the apparatus of Fig. 1;

Fig. 7 is a schematic plan view of the apparatus of Fig. 6;

Fig. 8 is a schematic side view of the apparatus of Fig. 6;

Fig. 9 is a schematic front view showing another modification of the apparatus of Fig. 1;

Fig. 10 is a schematic plan view of the apparatus of Fig. 9;

Fig. 11 is a schematic side view of the apparatus of Fig. 9;

Fig. 12 is a schematic plan view showing a further modification of the apparatus of Fig. 1;

Fig. 13 is a side view of the apparatus of Fig. 12;

Fig. 14 is a schematic plan view showing a further modification of the apparatus of Fig. 1;

Fig. 15 is a schematic side view of the apparatus of Fig. 14;

Fig. 16 is a schematic plan view showing a still another modification of the apparatus shown in Fig. 1; and

Fig. 17 is a schematic side view of the apparatus shown in Fig. 16.

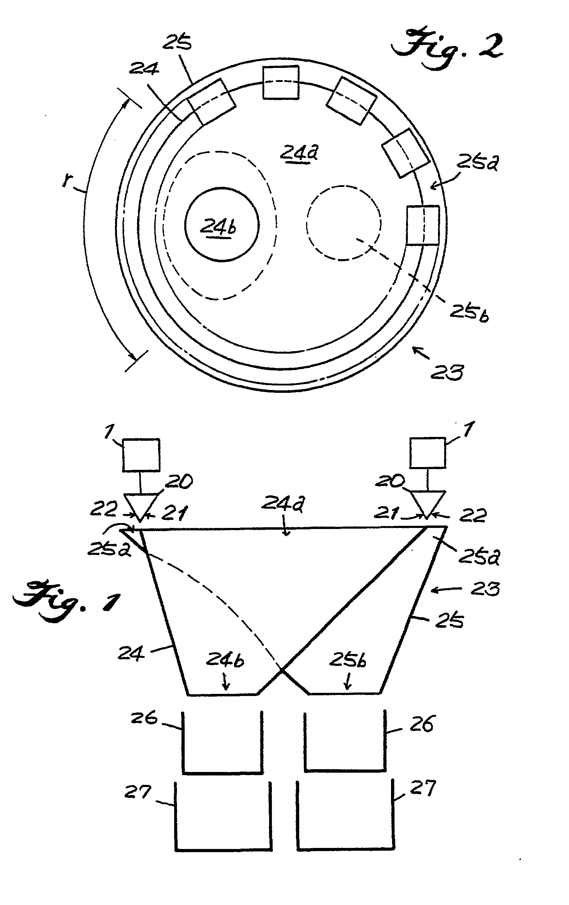

Referring to Figs. 1 and 2, weighing hoppers are denoted by 20, the weighing hoppers being of the double-outlet type having two discharge ports 21 and 22. There are provided article feeders (not shown) respectively associated with the weighing hoppers 20. It is possible to use feeders of the known type designed such that when the associated weighing hoppers have discharged articles and become empty, the feeders are each started to feed a single article or a set number of articles or a set weight of articles to the associated weighing hoppers and then stop. The numeral 23 denotes a chute of double construction comprising substantially conical inner and outer chute sections 24 and 25 crossing each other, and inlet ports 24a and 25a arranged in two circles one within the other and discharge ports 24b and 25b in bifurcated form. The numeral 26 denotes a timing hopper; and 27 denotes buckets operatively connected to a packaging machine or the like.

The inner and outer chute sections 24 and 25 of the chute 23 cross each other; the timing (for a fall signal A in Figs. 3 to 5 to be later described) is such that articles from a plurality of weighing hoppers (about 2 or 3 weighing hoppers) disposed in a position (indicated by an arrow r in Fig. 2) where the intersection line of the inner and outer chute sections is nearly horizontal will be always discharged into the inner chute section 24.

The manner of collecting articles by the apparatus described above will now be described with reference to timing charts for fall signals shown in Figs. 3 to 5.

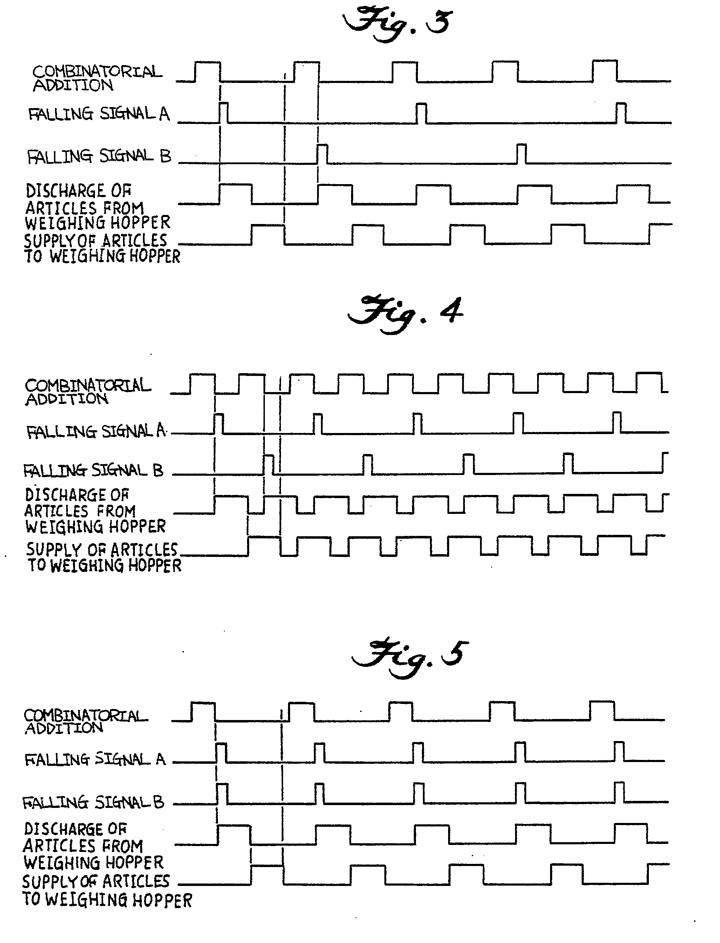

Figs. 3 and 4 refer to a case where each time combinations of weight values are computed, a particular combination whose addition value is equal or closest to a set weight is selected and articles are discharged from the weighing hoppers corresponding to the selected combination, wherein fall signals A and B are alternately delivered in connection with respective operations of combinatorial addition. In the case of Fig. 4 during discharge of articles selected in the last operation of combinatorial addition and during feeding of articles to weighing hoppers which are now empty, the next operation of combinatorial addition is performed on the weight values of articles not selected the last time and/or weight values not used in the last operation of combinatorial addition. Fig. 5 refers to a case where in each operation of combinatorial addition, a combination whose addition value is equal or closest to a set weight and another combination whose addition value is the second closest are obtained and the two sets of articles corresponding to these two combinations are simultaneously and separately discharged on the basis of fall signal A and B which are issued at the same time.

Groups of articles fed to the weighing hoppers are weighed by the associated weighing machines 1 and addition is performed on each combination of the indicated weight values to select a combination whose addition value is equal or closest to a set weight, and the weighing hoppers corresponding to the selected combination are caused to open one of their respective discharge ports 21 and 22 to discharge the articles into the chute 23. With the timing for the fall signal A shown in Fig. 3, the articles corresponding to the selected combination are discharged from the discharge ports 21 of the weighing hoppers 20 into the inner chute section 24 of the chute 23, and with the timing for the fall signal B shown in Fig. 3, the articles corresponding to the selected combination are discharged from the discharge ports 22 of the weighing hoppers 20 into the outer chute section 25.

Thus, the method and apparatus for collecting articles according to this embodiment of the invention are designed to discharge articles from the discharge ports 21 and 22 of the weighing hoppers 20 at a suitable time interval separately into the inner and outer chute sections 24 and 25 of the chute 23. Thus, if the capability to combinatorially selectively discharge articles from the discharge ports 21 and 22 of the weighing hoppers 20 is n times/min, then it follows that the capability to collect articles through the timing hoppers 26 is such that the inner and outer chute sections 24 and 25 each operate n/2 times/min in the case of Figs. 3 and 4 and n times/min in the case of Fig. 5. In addition, since the inner and outer chute sections 24 and 25 cross each other in the region indicated by the arrow r in Fig. 2, as described above, articles from a plurality of weighing hoppers disposed in that region will be always discharged into the inner chute section 24.

Articles discharged from either of the inner and outer chute sections 24 and 25 in the manner described above are respectively collected in the timing hoppers therebelow, and the collected articles are discharged into the buckets therebelow as soon as the timing hoppers are opened.

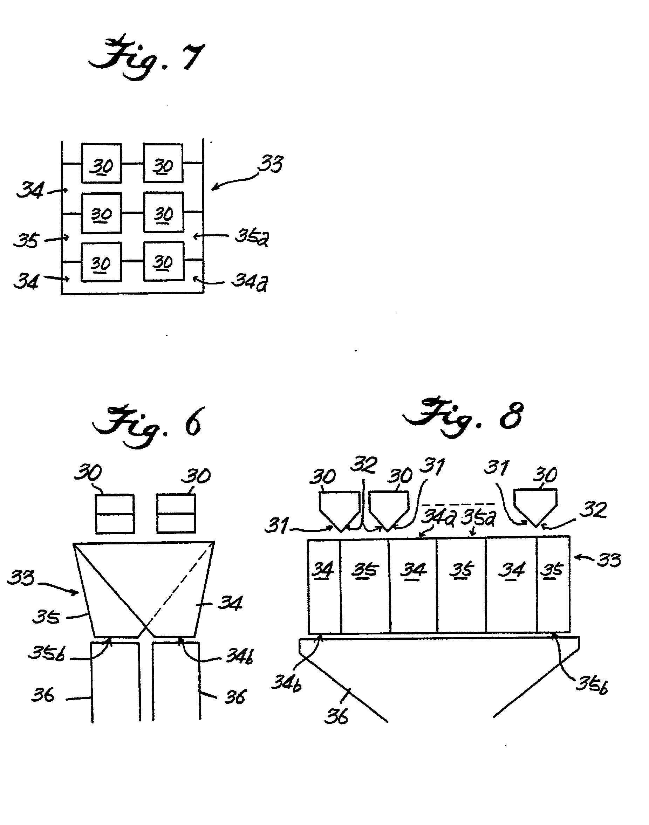

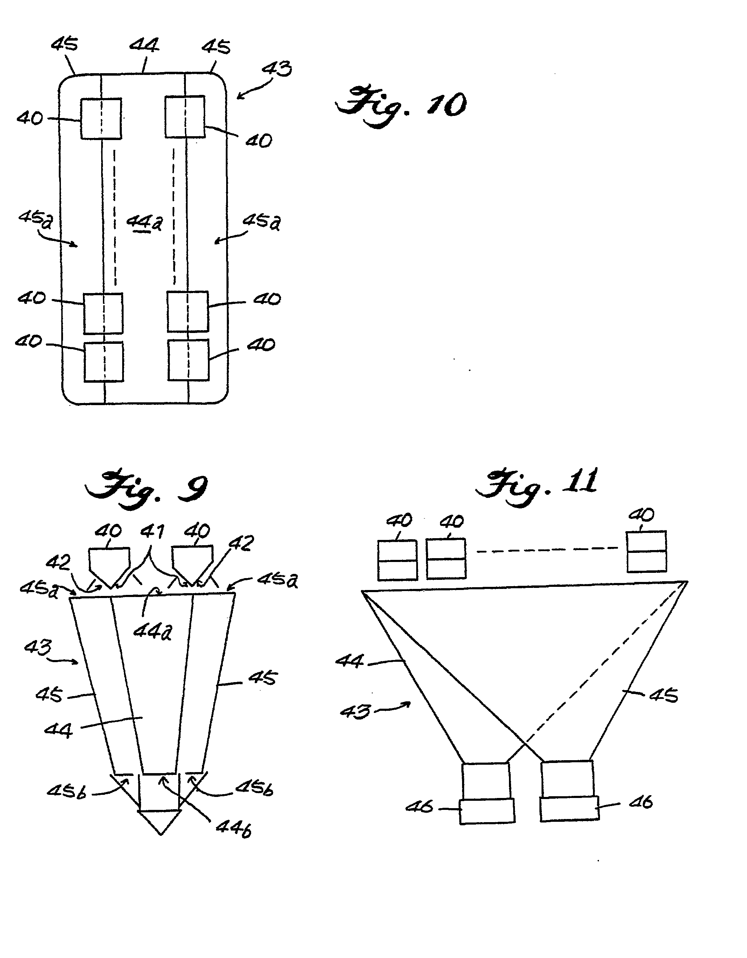

Figs. 6 to 8 show a modification of the embodiment described above with reference to Figs. 1 and 2.

In this modification, the circular arrangement of weighing hoppers 20 in the above embodiment is replaced by a linear arrangement wherein weighing hoppers 30 are arranged in two lines above and longitudinally of a chute 33 having numbers of chute sections 34 and 35 of required width separated from each other. More particularly, first discharge ports 31 of the weighing hoppers 30 are disposed on both sides above the inlet ports 34a of the chute sections 34 of the chute 33 and second discharge ports 32 of the weighing hoppers 30 are disposed on both sides above the inlet ports 35a of the chute sections 35 of the chute 33. As for the timing for fall signals, it is so arranged that articles are discharged from the discharge ports 31 of the weighing hoppers 30 into the chute sections 34 of the chute 33 when selection is made with the timing for the fall signal A shown in Fig. 3 and from the discharge ports 32 of the weighing hoppers 30 into the chute sections 35 of the chute 33 with the timing for the fall signal B. Collection chutes 36 are respectively provided below the discharge ports 34b and 35b of the chute sections 34 and 35 of the chute 33 for collecting articles discharged from the chute sections 34 and 35 and then discharging them to the next processing step. As compared with the circular arrangement in the above embodiment, the chute configuration is simple and there is no need to adjust the timing for fall signals owing to the crossing of the inner and outer chute sections, a fact which leads to improved weighing accuracy.

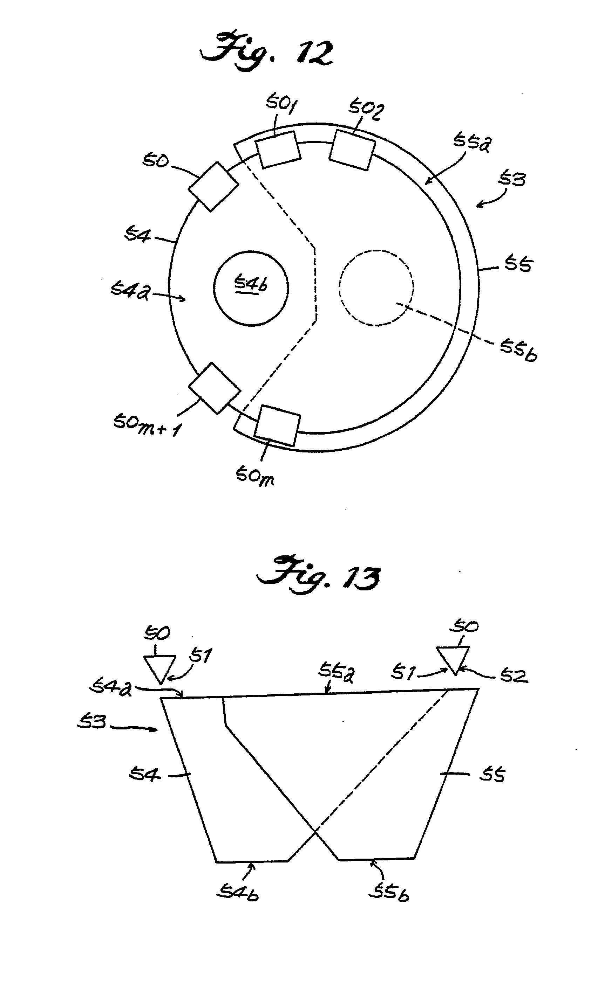

Figs. 9 to 11 show another modification of the embodiment described above with reference to Figs. 1 and 2.

In this modification, as in the first modification, weighing hoppers 40 are linearly arranged in such a manner that the weighing hoppers 40 are disposed on both side above and longitudinally of a chute 43 which comprises three longitudinally extending chute sections, namely, a central chute section 44 and two lateral chute sections 45. First discharge ports 41 of the weighing hoppers 40 are disposed on both sides above the inlet port 44a of the central chute section 44 of the chute 43, and second discharge ports 42 of the weighing hoppers 40 are disposed above the inlet ports 45a of the lateral chute sections 45. The timing for fall signals is set in the same manner as in the first modification. Thus, the timing for the fall signal B in Fig. 3 is set such that articles are discharged from the discharge ports 45 of the weighing hoppers 40 into the lateral chute sections 45 of the chute 43 at the same time. Timing hoppers 46 are provided below the discharge port 44b of the central chute section 44 of the chute 43 and below the discharge ports 45b of the lateral chute sections 45 for collecting articles discharged from the central and lateral chute sections 44 and 45.

Figs. 12 and 13 show another modification of the embodiment shown in Figs. 1 and 2.

With the chute 23 in the embodiment described above, the inner and outer chute sections 24 and 25 differ in the capability to discharge articles, presenting various problems. The inner chute section 24 is internally in the form of a cone having a steep slope, while the outer chute section 25 has a steep slope in a region nearer to the discharge port 25b but a gentle slope in a farther region and is bifurcated as it bypasses the periphery of the inner chute section 24, defining a long discharge path which results in a reduced rate of article discharge. As a result, the timing for discharge of articles in combinatorial weighing becomes inaccurate. Further, in the bypass portion of the outer chute section 25, a narrow discharge path is defined between the inner and outer chute sections 24 and 25, causing a bridge phenomenon depending upon the kind of the articles, which may make it impossible to discharge articles. Further, the configuration of the outer chute section 25 is so complicated that it is hard to fabricate.

In Figs. 12 and 13, the numeral 53 denotes a chute comprising an inverted frustoconical inner chute section 54 and an outer chute section 55, these sections being arranged so that their upper openings 54a and 55a are concentric with each other and they cross each other such that they do not communicate with each other, their lower discharge ports 54b and 55b being disposed side by side. A portion of the outer chute section 55 is removed in a region where the outer peripheral surface of the inner chute 54 and the outer chute 55 define a narrow discharge path therebetween and where the bottom surface presents a gentle slope. A large number (n) of weighing hoppers 50 are arranged in a circle above the chute 53 and on the boundary between the inner and outer chute sections 54 and 55. The hoppers 50 are each provided with an independent article feeder (not shown), so that when hoppers 50 have discharged articles to become empty, the associated feeders feed a suitable amount or number of articles to the hoppers 50. Of these n weighing hoppers 50, the 1st through mth weighing hoppers $50_1$, $50_2$,...$50_m$ (where m<n) disposed to overlap the inner and outer chute sections 54 and 55 have inwardly and outwardly directed discharge ports 51 and 52, while the (m+1)th to nth weighing hoppers $50_{m+1}$...$50_n$ disposed over the edge of the inner chute section 54 have only an inwardly directed discharge port 51.

In operation, the n weighing hoppers are fed with articles in suitable amounts or numbers from the respective feeders and the groups of articles fed thereto are weighed by the associated weighing machines. Combinations are computed of the weight values indicated by the weighing machines corresponding to the 1st to mth weighing hoppers $50_1$...$50_m$ to select a particular combination whose addition value is equal or closest to a set weight or number. Combinations are then computed of the weight values indicated by the weighing machines corresponding to those of the 1st to mth weighing hoppers $50_1$... $50_m$ which were not selected in the last combinatorial operation and the weight values indicated by the weighing machines corresponding to the (m+1)th and nth weighing hoppers $50_{m+1}$...$50_n$ which did not take part in the last combinatorial operation, so as to select a combination whose addition value is equal or closest to the set weight or number. The discharge ports 52 of the weighing hoppers corresponding to the combination selected in the last combinatorial operation are opened to discharge the articles therein into the outer chute section 55 to collect the articles in the latter, the collected articles being discharged through the discharge port 55b of the outer chute section 55, while the inner discharge ports 51 of the weighing hoppers corresponding to the combination selected in the combinatorial operation this time are opened to discharge the articles therein into the inner chute section 54 to collect the articles in the latter, the collected articles being discharged through the discharge port 54b thereof. The now-empty hoppers are fed with articles in suitable amount or number from the corresponding article feeders and the above operations are repeated to successively select two discrete/optimum combinations whose addition values are each equal or closest to the set weight or number, discharging the articles into the inner and outer chute sections 54 and 55 of the chute 53, thus collecting them in two systems.

In the above description, after two combinations have been obtained, the discharge ports of the corresponding weighing hoppers are opened to discharge the articles at the same time. However, each time one combination is obtained, the articles may be discharged from the corresponding hoppers into the predetermined chute alternately.

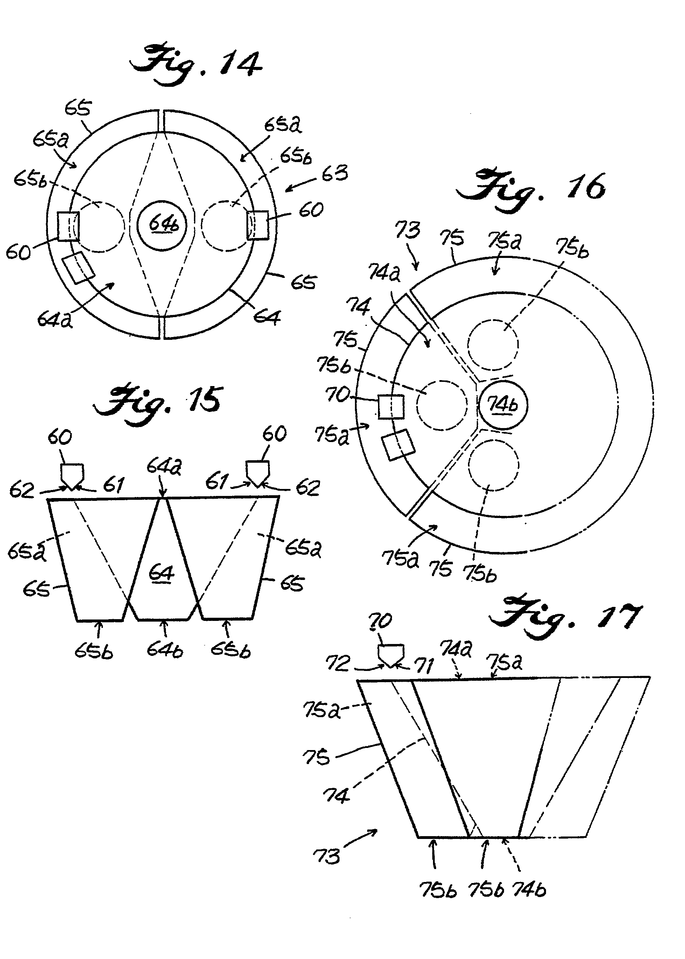

The embodiment of an apparatus having two discharge paths has been described above. However, the number of discharge paths is not limited to two but may be more than two. The layout of an apparatus having three discharge paths is shown in Figs.14 and 15. In this embodiment, n weighing sections (each comprising at least a weighing machine and a weighing hopper 60 having two discharge ports) are used, and combinations are computed to select three combinations which satisfy a set value to discharge articles through three discharge ports. A chute 63 comprises an inner chute section 64 and two outer chute sections 65, the inner chute section 64 being inverted frusto-conical, having an inlet port 64a and a discharge port 64b, the outer chute sections 65 each being substantially semi-circular in plan view, having an inlet port 65a and a discharge port 65b. The weighing hoppers 60 having two discharge ports 61 and 62 are disposed above the boundary between the inner and outer chute sections 64 and 65 so that they can discharge in either side.

The method of computation in this apparatus will now be described. Combinations are computed of weight data from the 1st to (n/2)th weighing sections and from the (n/2 + 1)th to nth weighing sections to decide two optimum combinations $O_1$ and $O_2$. Combinations are then computed of weight data from the 1st to nth, i.e., all weighing sections, except those corresponding to the optimum combinations, to decide an optimum combination I. The weighing hoppers of the weighing sections corresponding to these combinations $O_1$, $O_2$ and I are opened for discharge. In this case, articles corresponding to the combinations $O_1$ and $O_2$ are discharged into the outer chute sections 65 and articles corresponding to the combination I are discharged into the inner chute section 64. The weighing hoppers which have discharged are newly fed with articles and the same operation repeated.

An arrangement in which four or more, e.g., M, discharge paths are provided is shown in Figs. 16 and 17. A chute 73 comprises an inverted frusto-conical inner chute section 74 and M-1 outer chute sections each having an inlet port 75a and a discharge port 75b. In this case, combinations are computed of weight data from n/(M-1) weighing sections disposed above the outer chute sections 75 to decide the optimum combinations $O_1$...$O_{M-1}$, and combinations are computed of weight data from the n or all weighing sections except those corresponding to the combinations $O_1$...$O_{M-1}$ to decide the optimum combination I. The weighing hoppers 70 of the weighing sections corresponding to these combinations $O_1$-...$O_{M-1}$ and I are opened for discharge. In this case, for the combinations $O_1$...$O_{M-1}$, those discharge ports which discharge into the outer chute sections 75, i.e., the outer discharge ports 72 of the weighing hoppers 70 are opened. For the combination I, those discharge ports which discharge into the inner chute section 74, i.e., the inner discharge ports 71 of the weighing hoppers 70 are opened. The hoppers which have discharged are fed with articles for the next combinatorial operation, and the operation is repeated.

## Claims

1. A combinatorial weighing system comprising a plurality of weighing machines (1) for weighing articles; an arithmetic section for performing combinatorial operation on the basis of weighed data obtained by said weighing machines (1) and sending discharge signals to the weighing machines (1), and a chute (23) for discharging articles from the weighing machines (1); characterised in that each weighing machine has two discharging ports (21, 22) in that the chute (23) has a plurality of discharge paths (24, 25) with which the two discharge ports (21 22) of each weighing machine (1) are respectively associated, and in that said discharge ports (21, 22) are actuated by different signals independently of one another.

2. A system according to claim 1 characterised in that a weighing hopper (20) is associated with each weighing machines (1), and in that the discharging ports (21, 22) are comprised by the weighing hoppers (20).

3. A system according to claim 1 or claim 2, characterised in that a timing hopper (26) is situated under each discharge path (24, 25).

4. A system according to any of claims 1 to 3, characterised in that said chute (23) comprises one inner chute section (24) and one outer chute section (25).

5. A system according to claim 4, characterised in that said inner and outer chute sections (24, 25) each have an inlet port and a discharge port, and in that the chute sections (24, 25) cross each other so that their inlet ports (24a, 25a) are aranged one within the other with their discharge ports (24b, 25b) laterally spaced from each other.

6. A system according to claim 5, characterised in that a portion of said outer chute section (55) that surrounds the inner chute section (54) is cut away.

7. A system according to any of claims 1 to 3, characterised in that said chute (63) comprises one inner chute section (64) and two or more outer chute sections (65).

8. A system according to any of claims 1.to 7, characterised in that combinatorial operation is performed on the basis of weighed data from a plurality of weighing machines (1) to search for an optimum combination whose addition value is equal or the closest to a set value, and articles are discharged from the weighing machines (1) corresponding to the searched-for combination, and in that during the discharge of articles from the weighing machines (1) and during the feeding of fresh articles to those weighing machines (1) combinatorial operation is performed on the basis of weighed data from one or more of the weighing machines (1) selected from the remaining weighing machines (1) which has not discharged their articles to search for an optimum combination, the particular combination thus obtained being determined as the combination for the next discharge.

9. A method of collecting articles in a combinatorial weighing system according to any of claims 1 to 8, characterised by the steps of after performing combinatorial operation on the basis of weighed data on articles received in the plurality of weighing machines (1) to search for an optimum combination, selectively opening either of the two discharge ports (21, 22) of said weighing machines (1) corresponding to the optimum combination so that articles are discharged to one of discharge paths respectively associated with the discharge ports (21, 22) of said weighing machines (1), thereby collecting groups of articles discharged successively from the weighing machines (1) separately one from the other.

10. A method according to claim 9, characterised by retrieving an optimum combination, discharging articles from the weighing machines (1) corresponding to the retrieved combination, and during the discharge of articles from the weighing machines and during the feeding of fresh articles to the same weighing machines, performing combinatorial operation on the basis of weighing data from one or more of the weighing machines (1) which has not discharged their articles to find out an optimum combination, is the particular combination thus obtained being determined as the next combination.

**Revendications**

1. Système combinatoire de pesée comprenant une pluralité de balances (1) pour peser des articles, une partie arithmétique pour l'éxécution d'opérations combinatoires sur la base de données de pesage obtenues par lesdites balances (1) et pour l'envoi de signaux de déchargement à ces balances (1), et une chute (23) pour le déchargement des articles à partir des balances (1), caractérisé en ce que chaque balance a deux ouvertures de déchargement (21, 22), en ce que la chute (23) a une pluralité de chemins de déchargement (24, 25) auxquels les deux ouvertures de déchargement (21, 22) de chaque balance (1) sont associées respectivement, et en ce que lesdites ouvertures de déchargement (21, 22) sont commandées par des signaux différents indépendamment l'une de l'autre.

2. Système selon la revendication 1, caractérisé en ce qu'une trémie de pesage (20) est associée à chaque balance (1) et en ce que les ouvertures de déchargement (21, 22) sont comprises dans les trémies de pesage (20).

3. Système selon la revendication 1, ou la revendication 2, caractérisé en ce qu'une trémie de temporisation (26) est située sous chaque chemin de déchargement (24, 25).

4. Système selon l'une quelconque des revendications 1 à 3, caractérisé en ce que ladite chute (23) comprend une partie intérieure de chute (24) et une partie extérieure de chute (25).

5. Système selon la revendication 4, caractérisé en ce que lesdites parties intérieure et extérieure de chute (24, 25) ont chacune un orifice d'entrée et un orifice de déchargement et en ce que les parties de chute (24, 25) se croisent l'une l'autre de sorte que leurs orifices d'entrée (24a, 25a) sont disposés l'un dans l'autre avec leurs orifices de déchargement (24b, 25b) espacés latéralement l'un de l'autre.

6. Système selon la revendication 1, caractérisé en ce qu'une fraction de la partie extérieure de chute (55) qui entoure la partie intérieure de chute (54) est supprimée.

7. Système selon l'une quelconque des revendications 1 à 3, caractérisé en ce que la chute (63) comprend une partie intérieure de chute (64) et deux ou plusieurs parties extérieures de chute (65).

8. Système selon l'une quelconque des revendications 1 à 7, caractérisé en ce que l'opération combinatoire est exécutée sur la base de données de pesage provenant d'une pluralité de balances (1) pour la recherche d'une combinaison optimale dont la valeur d'addition est égale à une valeur fixée ou la plus proche de celle-ci et les articles sont déchargés des balances (1) correspondantes à la combinaison cherchée, et en ce que pendant le déchargement d'articles des balances (1) et pendant la fourniture d'articles frais à ces balances (1) une opération combinatoire est exécutée sur la base de données de pesage venant d'une ou de plusieurs balances (1) choisies parmi le balances (1) restantes qui n'ont pas déchargé leurs articles pour la recherche d'une combinaison optimale, la combinaison particulière ainsi obtenue étant déterminée comme la combinaison pour le déchargement suivant.

9. Procédé de rassemblement d'articles dans un système combinatoire de pesée selon l'une quelconque des revendications 1 à 8, caractérisée par les opérations suivantes, après l'exécution d'une opération combinatoire sur la base de données de pesage sur des articles reçus dans une pluralité de balances (1) pour chercher une combinaison optimale, ouvrir sélectivement l'un ou l'autre des deux orifices de déchargement (21, 22) des balances (1) correspondant à la combinaison optimale afin que les articles soient déchargés par l'un des chemins de déchargement associés respectivement aux orifices de déchargement (21, 22) des balances (1) et ainsi rassembler des groupes d'articles déchargés successivement des balances (1) séparément les unes des autres.

10. Procédé selon la revendication 9, caractérisé par l'établissement d'une combinaison optimale, le déchargement d'articles des balances (1) correspondantes à la combinaison établie, et pendant le déchargement des articles des balances et pendant la fourniture d'articles frais aux mêmes balances, l'exécution d'une opération combinatoire sur la base de données de pesage venant d'une ou de plusieurs balances (1) qui n'ont pas déchargé leurs articles pour trouver une combinaison optimale, la combinaison particulière ainsi obtenue étant déterminée comme la combinaison suivante.

**Patentansprüche**

1. Kombinatorisches Wägesystem, das eine Vielzahl von Wägemaschinen (1) zum wägen von Waren aufweist; einen Rechenabschnitt zur Durchführung von kombinatorischen Operationen auf der Grundlage von von den Wägemaschinen (1) erhaltenen Gewichtsdaten, und das Signale zu den Wägemaschinen (1) sendet, sowie eine Rutsche (23) zur Abgabe von Waren von den Wägemaschinen (1), dadurch gekennzeichnet, daß jede Wägemaschine zwei Abgabeöffnungen (21, 22) aufweist, daß die Rutsche (23) eine Vielzahl von Abgabepfaden (24, 25) aufweist, mit denen die Abgabeöffnungen (21, 22) jeder Wägemaschine (1) jeweils verbunden sind, und daß die Abgabeöffnungen (21, 22) unabhängig voneinander durch verschiedene Signale betätigt werden.

2. System nach Anspruch 1, dadurch gekennzeichnet, daß jeder Wägemaschine (1) ein Wägetrichter (20) zugeordnet ist, und daß die Wägetrichter (20) Abgabeöffnungen (21, 22) aufweisen.

3. System nach Anspruch 1 oder 2, dadurch gekennzeichnet, daß sich unter jedem Abgabepfad (24, 25) ein zeitgesteuerter Trichter (26) befindet.

4. System nach einem der Ansprüche 1 bis 3, dadurch gekennzeichnet, daß die Rutsche (23) einen inneren Rutschenabschnitt (24) und einen äußeren Rutschenabschnitt (25) aufweist.

5. System nach Anspruch 4, dadurch gekennzeichnet, daß die inneren und äußeren Rutschenabschnitte (24, 25) jeweils eine Einlaß- und Abgabeöffnung aufweisen, und daß sich die Rutschenabschnitte (24, 25) kreuzen, so daß ihre Einlaßöffnungen (24a, 25a) ineinander angeordnet sind, wobei ihre Abgabeöffnungen (24b, 25b) seitlich voneinander beabstandet sind.

6. System nach Anspruch 5, dadurch gekennzeichnet, daß ein Teil des äußeren Rutschenabschnitts (55), der den inneren Rutschenabschnitt (54) umgibt, weggeschnitten ist.

7. System nach einem der Ansprüche 1 bis 3, dadurch gekennzeichnet, daß die Rutsche (62) einen inneren Rutschenabschnitt (64) und zwei oder mehr äußere Rutschenabschnitte (65) aufweist.

8. System nach einem der Ansprüche 1 bis 7, dadurch gekennzeichnet, daß auf der Grundlage der Gewichtsdaten von einer Vielzahl von Wägemaschinen (1) kombinatorische Operationen durchgeführt werden, um nach einer optimalen Kombination zu suchen, deren Additionswert gleich oder nahezu gleich einem eingestellten Wert ist, und daß Waren von den Wägemaschinen (1) abgegeben werden, die der gesuchten Kombination entsprechen, sowie dadurch, daß während der Abgabe von Waren von den Wägemaschinen (1) und während der Zufuhr von frischen Waren zu den Wägemaschinen (1) kombinatorische Operationen auf der Grundlage der Gewichtsdaten von einer oder mehrerer der Wägemaschinen (1) durchgeführt werden, die von den verbleibenden Wägemaschinen (19) ausgewählt wurden, die ihre Waren nicht abgegeben haben, um nach einer optimalen Kombination zu suchen, wobei die bestimmte Kombination, die so erhalten wurde, als die Kombination für die nächste Abgabe bestimmt wird.

9. Verfahren zum Sammeln von Waren in einem kombinatorischen Wägesystem nach einem der Ansprüche 1 bis 8, gekennzeichnet durch die Schritte, daß nach dem Durchführen kombinatorischer Operationen auf der Grundlage von Gewichtsdaten an Waren, die in der Vielzahl von Wägemaschinen (1) aufgenommen wurden, um nach einer optimalen Kombination zu suchen, selektiv eine der zwei Abgabeöffnungen (21, 22) der Wägemaschinen (1) geöffnet wird, die der optimalen Kombination entsprechen, so daß Waren auf einen der Abgabepfade abgegeben werden, die jeweils mit den Abgabeöffnungen (21, 22) der Wägemaschinen (1) verbunden sind, wodurch Warengruppen gesammelt werden, die in Folge von den Wägemaschinen (1) getrennt voneinander abgegeben werden.

10. Verfahren nach Anspruch 9, dadurch gekennzeichnet, daß eine optimale Kombination wiedergewonnen wird, daß von den Wägemaschinen (1) Waren entsprechend der wiedergewonnenen Kombination abgegeben werden, und daß während der Abgabe von Waren von den Wägemaschinen und während der Zufuhr von frischen Waren zu denselben Wägemaschinen kombinatorische Operationen auf der Grundlage der Wägedaten von einer oder mehrerer der Wägemaschinen (1) durchgeführt werden, die ihre Waren nicht abgegeben haben, um eine optimale Kombination herauszufinden, wobei die bestimmte Kombination, die so erhalten wurde, als die nächste Kombination bestimmt wird.

*Fig. 2*

*Fig. 1*

Fig. 3

COMBINATORIAL ADDITION

FALLING SIGNAL A

FALLING SIGNAL B

DISCHARGE OF ARTICLES FROM WEIGHING HOPPER

SUPPLY OF ARTICLES TO WEIGHING HOPPER

Fig. 4

COMBINATORIAL ADDITION

FALLING SIGNAL A

FALLING SIGNAL B

DISCHARGE OF ARTICLES FROM WEIGHING HOPPER

SUPPLY OF ARTICLES TO WEIGHING HOPPER

Fig. 5

COMBINATORIAL ADDITION

FALLING SIGNAL A

FALLING SIGNAL B

DISCHARGE OF ARTICLES FROM WEIGHING HOPPER

SUPPLY OF ARTICLES TO WEIGHING HOPPER

Fig. 7

Fig. 6

Fig. 8

*Fig. 10*

*Fig. 9*

*Fig. 11*

*Fig.* 12

*Fig.* 13

*Fig. 14*

*Fig. 15*

*Fig. 16*

*Fig. 17*